Europäisches Patentamt

European Patent Office

Office européen des brevets

(19)

(11) Veröffentlichungsnummer: **0 251 025**
**A2**

## (12) EUROPÄISCHE PATENTANMELDUNG

(21) Anmeldenummer: 87108653.4

(51) Int. Cl.⁴: **A61C 13/225**

(22) Anmeldetag: 16.06.87

(30) Priorität: **19.06.86 DE 3620590**

(43) Veröffentlichungstag der Anmeldung:
**07.01.88 Patentblatt 88/01**

(84) Benannte Vertragsstaaten:
**AT BE CH DE ES FR GB GR IT LI NL SE**

(71) Anmelder: **Firma Brügmann KG**
**Limburger Strasse 31**
**D-5860 Iserlohn(DE)**

(72) Erfinder: **Speckmann, Frank**
**Karl-Halle Strasse 101**
**D-5800 Hagen(DE)**

(74) Vertreter: **Hassler, Werner, Dr.**
**Postfach 17 04 Asenberg 62**
**D-5880 Lüdenscheid(DE)**

(54) **Befestigungsvorrichtung zur Befestigung einer Druckknopfpatrize in einem Prothesen-Metallgerüst.**

(57) Eine Befestigungsvorrichtung zur Befestigung einer Druckknopfpatrize in einem Prothesen-Metallgerüst, mit einer an dem Prothesengerüst festlegbaren Gewindemutter mit einer konischen Außenfläche, in welche die eine umlaufende Anschlagfläche aufweisende Patrize mit einem Gewindefuß einschraubbar ist. Das technische Problem ist die Bereitstellung einer Befestigungsvorrichtung, die sich einerseits mit großer Genauigkeit beim Aufbau des Prothesengerüsts herstellen läßt und die andererseits leicht und jederzeit austauschbar ist. Die konische Außenfläche der Gewindemutter (5) ist in eine entsprechend konische Aufnahmefläche (3) des Prothesengerüsts (1) einlegbar und mit ihrer kleineren Stirnfläche einem in situ an der der Aufnahmefläche (3) gegenüberliegenden Außenfläche des Prothesengerüsts anliegenden Auflageteller (8) der Patrize (9) zugewandt.

Fig. 6

## Befestigungsvorrichtung zur Befestigung einer Druckknopfpatrize in einem Prothesen-Metallgerüst

Die Erfindung geht aus von einer Befestigungsvorrichtung zur Befestigung einer Druckknopfpatrize in einem Prothesen-Metallgerüst, mit einer an dem Prothesengerüst festlegbaren Gewindemutter mit einer konischen Außenfläche, in welche die eine umlaufende Anschlagfläche aufweisende Patrize mit einem Gewindefuß einschraubbar ist.

Eine derartige Druckknopfpatrize dient zur klemmenden und/oder rastenden Halterung einer Prothese an einem Restgebißaufbau. Der Restgebißaufbau umfaßt ringförmige Matrizen zur klemmenden und/oder rastenden Aufnahme je einer Patrize. Diese Patrizen dienen vor allen zur Aufnahme von Zugkräften. Die Patrizen sind mit einem Gewindefuß in Muttergewindeteile des Prothesengerüsts eingeschraubt. Diese Gewindeteile sind nach der herkömmlichen Technik an das Prothesengerüst angelötet oder in dasselbe eingegossen. Beides bringt Schwierigkeiten bei der Fertigung mit sich. Insbesondere treten auch dann Probleme auf, wenn das Gewinde der Gewindemutter oder Gewindekappe unbrauchbar wird, so daß die Gewindekappe oder die Gewindemutter ausgetauscht werden muß.

Aus "dental-labor" 1986. H. 4, S. 539 bis 544 ist eine Befestigungsvorrichtung der eingangs genannten Art bekannt. In eine durch einen Platzhalter geformte Kammer des Prothesengerüsts ist eine kappenartige Gewindemutter mit Hilfe eines Bindemittels eingebettet. Ein Austausch der Gewindemutter ist auch hier praktisch nicht möglich, ohne das Prothesengerüst zu beeinträchtigen. Die in der Patrize gehaltene Gewindemutter ist gegenüber dem Prothesengerüst nachgiebig infolge der Bindemitteleinbettung. Diese Nachgiebigkeit ist oft unerwünscht.

Aufgabe der Erfindung ist die Bereitstellung einer Befestigungsvorrichtung, die sich einerseits mit großer Genauigkeit beim Aufbau des Prothesengerüsts herstellen läßt und die andererseits leicht und jederzeit austauschbar ist.

Diese Aufgabe wird nach der Erfindung dadurch gelöst, daß die konische Außenfläche der Gewindemutter in eine entsprechend konische Aufnahmefläche des Prothesengerüsts einlegbar ist und mit ihrer kleineren Stirnfläche einem in situ an der der Aufnahmefläche gegenüberliegenden Außenfläche des Prothesengerüsts anliegenden Auflageteller der Patrize zugewandt ist.

Die Befestigungsvorrichtung nach der Erfindung unterscheidet sich insofern vom Stand der Technik, als die Gewindemutter nicht stoffschlüssig in das Prothesengerüst eingebettet ist. Vielmehr wird bei der Herstellung und beim Aufbau des Prothesengerüsts der Raum für die Aufnahme der Gewindemutter mit Hilfe eines Kerns oder einer Platzhaltermutter in der Gußform ausgebildet. Die Aufnahme für die Gewindemutter wird also als konischer Aufnahmetrichter innerhalb des Prothesengerüsts bereitgestellt. Nach dem Guß des Prothesengerüsts kann dann bei der Fertigmontage die Gewindemutter und auch die Patrize eingesetzt und festgeschraubt werden. Diese Teile sind also reibschlüssig gehalten und jederzeit wieder ausbaubar. Die Gewindemutter erfordert auch keinen teueren Eingießwerkstoff. Die Gewindemutter kann bündig an dem Auflageteller der Patrize anliegen.

Zur besseren Formbarkeit der Aufnahme und zur selbsttätigen Zentrierung beim Einbau ist vorgesehen, daß innerhalb des Prothesengerüsts ein doppelkonischer Durchgang ausgebildet ist, dessen innere Konusfläche die Aufnahmefläche für die Gewindemutter ist, daß eine konische Außenfläche des Auflagetellers an der zweiten konischen Auflagefläche des Durchgangs anliegt und daß die kleinere Stirnfläche des Aufnahmetellers gleiche Größe wie die kleinere Stirnfläche der Gewindemutter hat. Die aneinanderstoßenden konischen Flächen des Durchgangs lassen sich in einfacher Weise nach dem Guß nachbearbeiten, wenn dies erforderlich ist.

Damit die Gewindemutter gegen eine Verdrehung gesichert ist, ist vorgesehen, daß die Gewindemutter in der Umfangsfläche eine nicht teilzylindrische Anschnittfläche als Verdrehsicherung hat. Geeignet ist eine Segmentanschnittfläche.

Damit in jedem Fall ein sicherer Anzug der Gewindemutter an der Patrize und eine starre Halterung gewährleistet ist, sieht die Erfindung vor, daß zwischen der kleineren Stirnfläche der Gewindemutter und dem Auflageteller der Patrize ein - schmaler Spalt freibleibt.

Zur Sicherung des Gewindes gegen eine Lockerung ist vorgesehen, daß die Gewindemutter einen axialen Schlitz aufweist. Hierdurch erreicht man beim Einschrauben und Festziehen des Gewindes eine Verspannung des Muttergewindes.

Dieses bedeutet, daß die Gewindemutter eine gleiche Konizität wie der innere konische Durchgang hat, daß jedoch die axiale Länge der Gewindemutter etwas geringer als die axiale Länge dieses inneren konischen Durchgangs ist. Allerdings muß die größere Stirnfläche einen solchen Durchmesser gleich dem größten Durchmesser des konischen Durchgangs haben. Die Gewindemutter wird dann durch die Anzugskraft des Gewindes in den konischen Durchgang hineingezogen.

Zur Formung des inneren konischen Durchgangs sieht die Erfindung vor, daß zur Modellierung des Prothesengerüst eine Platzhaltermutter vorgesehen ist, deren kleinere Stirnfläche bündig an dem Auflageteller der Patrize anliegt. Diese Platzhaltermutter hat eine axiale Länge, die der axialen Länge des inneren konischen Durchgangs gleich ist, so daß hierdurch eine vollständige Modellierung des inneren konischen Durchgangs im Modell des Prothesengerüsts möglich ist. Diese Platzhaltermutter kann für die Modellierungsarbeiten auf eine Patrize aufgeschraubt werden, so daß zusammen mit der konischen Fläche des Auflagetellers der Patrize ein genaues Modell des doppelkonischen Durchgangs zur Verfügung steht.

Ausführungsformen der Erfindung werden im folgenden unter Bezugnahme auf die anliegenden Zeichnungen erläutert, in denen darstellen:

Fig. 1 eine geschnittene Darstellung eines Ausschnitts eines Prothesengerüsts mit einer Befestigungsvorrichtung nach der Erfindung.

Fig. 2 eine Draufsicht zu Fig. 1,

Fig. 3 eine Draufsicht auf die Gewindemutter.

Fig. 4 eine geschnittene Darstellung zur Erläuterung der Modellierung des Prothesengerüsts mit Hilfe einer Platzhaltermutter,

Fig. 5 eine Aufsicht auf die Platzhaltermutter und

Fig. 6 eine geschnittene Darstellung einer abgewandelten Befestigungsvorrichtung.

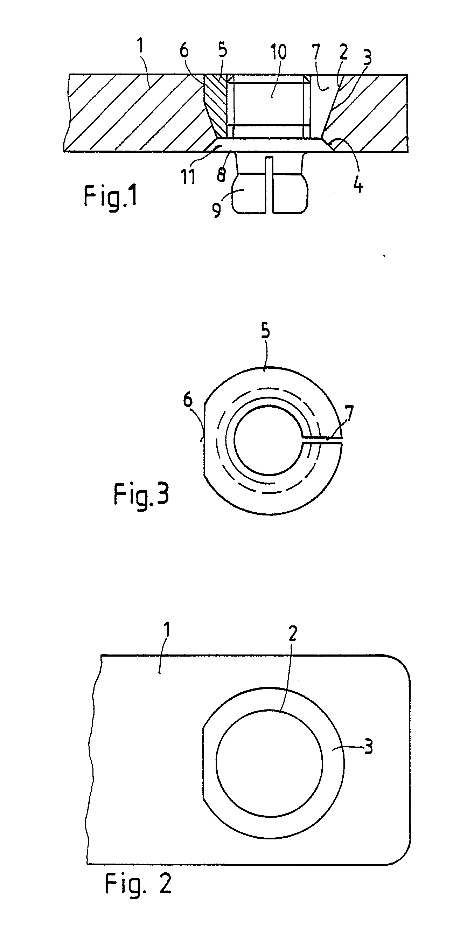

Fig. 1 zeigt einen Abschnitt, z.B. einen Steg eines Prothesengerüsts 1 aus einer Metallegierung. Das Prothesengerüst 1 ist nach übli chen Verfahren durch Gießen geformt. Innerhalb des Prothesengerüsts 1 ist ein Durchgang 2 mit zwei gegeneinander gerichteten konischen Flächen 3 und 4 ausgebildet. Dieser Durchgang 2 ist also ein doppelkonischer Durchgang innerhalb des Prothesengerüsts 1. Die eine, innere konische Fläche 3 dient zur Aufnahme einer konischen Gewindemutter 5, deren Umfangsfläche eine gleiche Konizität wie die konische Fläche 3 hat. Die Gewindemutter 5 hat in einem Bereich der Umfangsfläche eine Anschnittfläche 6, z.B. eine ebene Segmentfläche, die als Verdrehsicherung für die Gewindemutter 5 dient. Außerdem weist die Gewindemutter 5 einen axialen Schlitz 7 auf.

Der Durchgang 2 nimmt andererseits in der äußeren konischen Fläche 4 eine konische Außenfläche 11 eines Auflagetellers 8 einer stiftförmigen Patrize 9 auf, deren Gewindefuß 10 in die Gewindemutter 5 einschraubbar ist. Die kleinere Stirnfläche der Gewindemutter 5 und die kleinere Stirnfläche des Auflagetellers 8 haben gleiche Größe, so daß die konischen Flächen in einer gemeinsamen Randlinie aufeinanderstoßen.

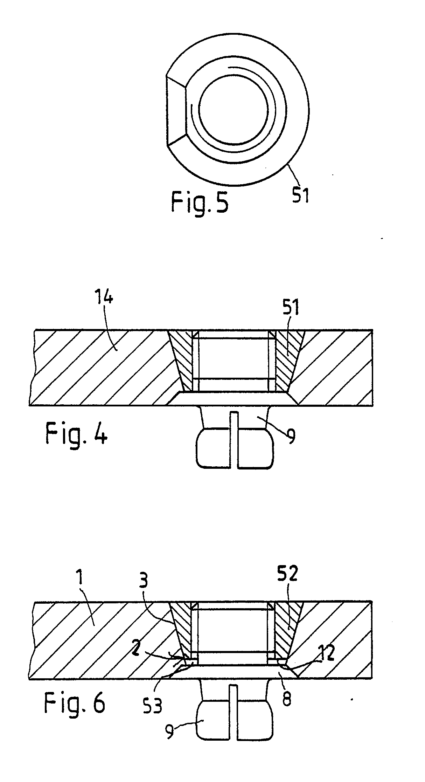

Bei der Herstellung des Zahnprothesengerüsts werden die Einzelheiten der Anordnung festgelegt. Eine Druckknopfpatrize 9 wird an der vorgesehenen Stelle angeordnet und zwar normalerweise als Modellteil. Entsprechend ist auch eine Platzhaltermutter 51 vorgesehen, Fig. 4. Diese Teile werden dann in üblicher Weise in die Modellierung des Prothesengerüsts bzw. der Zahnprothese einbezogen. Der Zahntechniker formt so ein Modell 14 des Prothesengerüsts aus einer Modelliermasse. Innerhalb dieses Modells ist genau die doppelkonische Fläche ausgebildet. Die konischen Flächen stoßen in einer gemeinsamen Randlinie zusammen, so daß die Kante von beiden Seiten zugänglich ist. Das Modell wird dann mit einer Einbettmasse umformt, und das Prothesengerüst wird gegossen. Man erhält so innerhalb des Gußteils eine genaue Formung des doppelkonischen Durchgangs 2. Der doppelkonische Durchgang 2 hat zwischen den konischen Flächen 3 und 4 einen winkligen Übergang. Die konischen Flächen sind gut zugänglich und können erforderlichenfalls nachgearbeitet werden, falls beim Guß Fehler aufgetreten sind.

Zur Vervollständigung des Zahnprothesengerüsts wird die Patrize 9 montiert, indem eine Gewindemutter 5 eingelegt und der Gewindeanker 9 eingeschraubt wird. Die Anschnittfläche 6 verhindert ein Verdrehen der Gewindemutter, so daß ein sicherer Anzug möglich ist. Der Schlitz 7 stellt sicher, daß beim Anziehen durch radiale, von der konischen Fläche 3 übertragene Kräfte eine Spannung erzeugt wird, die den Gewin defuß 10 der Patrize 9 klemmend festhält und so gegen ein unbeabsichtigtes Lösen sichert.

Bei einer Reparatur der Zahnprothese oder bei einer Beschädigung der Patrize oder eines Gewindes lassen sich die Patrize 9 und die Gewindemutter 5 leicht austauschen, ohne daß an der Zahnprothese Manipulationen vorgenommen werden müssen. Zum Austausch der Befestigung ist insbesondere keine Erwärmung erforderlich, so daß wärmeempfindliche Teile, wie Kunststoffverblendungen oder dergleichen während dieser Reparatur an dem Prothesengerüst verbleiben können.

Nach einer weiteren Abwandlung der Erfindung gemäß Fig. 6 ist vorgesehen, daß die Gewindemutter 52 in axialer Richtung eine geringere Länge als die konische Fläche 3 hat. Die Konizität der konischen Fläche der Gewindemutter 52 ist allerdings der Konizität der konischen Fläche 3 des Durchgangs 2 gleich. Die größere Stirnfläche hat auch einen gleichen Durchmesser wie der größte Durchmesser der konischen Fläche 3, damit die Gewindemutter 52 am größeren Umfangsteil der konischen Fläche anliegt. Es bleibt dann zwischen der kleineren Stirnfläche 12 der Gewindemutter 52 und dem Auflageteller 8 der Patrize 9 ein schmaler Spalt 13 frei. Dieser Spalt stellt sicher, daß auch bei geringen Toleranzen immer ein sicherer Anzug und ein sicherer Reibschluß des Gewindefußes der Patrize innerhalb des Prothesengerüsts 1 gewährleistet ist.

**Ansprüche**

1. Befestigungsvorrichtung zur Befestigung einer Druckknopfpatrize in einem Prothesen-Metallgerüst, mit einer an dem Prothesengerüst festlegbaren Gewindemutter mit einer konischen Außenfläche, in welche die eine umlaufende Anschlagfläche aufweisende Patrize mit einem Gewindefuß einschraubbar ist, dadurch gekennzeichnet, daß die konische Außenfläche der Gewindemutter (5) in eine entsprechend konische Aufnahmefläche (3) des Prothesengerüsts (1) einlegbar ist und mit ihrer kleineren Stirnfläche einem in situ an der der Aufnahmefläche (3) gegenüberliegenden Außenfläche des Prothesengerüsts anliegenden Auflageteller (8) der Patrize (9) zugewandt ist.

2. Befestigungsvorrichtung nach Anspruch 1, dadurch gekennzeichnet, daß innerhalb des Prothesengerüsts (1) ein doppelkonischer Durchgang (2) ausgebildet ist, dessen innere Konusfläche die Aufnahmefläche (3) für die Gewindemutter (5) ist, daß eine konische Außenfläche (11) des Auflagetellers (8) an der zweiten konischen Auflagefläche (4) des Durchgangs (2) anliegt und daß die kleinere Stirnfläche des Aufnahmetetrllers (8) gleiche Größe wie die kleinere Stirnfläche der Gewindemutter (5) hat.

3. Befestigungsvorrichtung nach Anspruch 1 oder 2, dadurch gekennzeichnet, daß die Gewindemutter (5) in der Umfangsfläche eine Anschnittfläche (6) als Verdrehsicherung hat.

4. Befestigungsvorrichtung nach einem der Ansprüche 1 bis 3, dadurch gekennzeichnet, daß zwischen der kleineren Stirnfläche (12) der Gewindemutter (52) und dem Auflageteller (8) der Patrize (9) ein schmaler Spalt (53) freibleibt.

5. Befestigungsvorrichtung nach einem der Ansprüche 1 bis 3, dadurch gekennzeichnet, daß die Gewindemutter (5) einen axialen Schlitz (7) aufweist.

6. Befestigungsvorrichtung nach einem der Ansprüche 1 bis 5, dadurch gekennzeichnet, daß zur Modellierung des Prothesengerüsts (1) eine Platzhaltermutter (51) vorgesehen ist, deren kleinere Stirnfläche bündig an dem Auflageteller (8) der Patrize (9) anliegt.

Fig.1

Fig.3

Fig. 2

Fig. 5

Fig. 4

Fig. 6

peckmann

A 87094